# EUROPEAN PATENT SPECIFICATION

(11) **EP 1 665 851 B1**
(45) Date of publication and mention of the grant of the patent: **06.05.2009**
(21) Application number: 03818594.8
(22) Date of filing: 05.09.2003
(51) Int. Cl.: H04W 24/00, H04L 12/56

(54) **MONITORING IN A TELECOMMUNICATION NETWORK**
ÜBERWACHUNG IN EINEM TELEKOMMUNIKATIONSNETZ
CONTROLE DANS UN RESEAU DE TELECOMMUNICATIONS

(43) Date of publication of application: 07.06.2006
(73) Proprietor: TELEFONAKTIEBOLAGET LM ERICSSON (publ), 164 83 Stockholm (SE)
(72) Inventor: EKSTRÖM, Bo, S-114 48 Stockholm (SE); WALLINDER, Sören, S-136 70 Haninge (SE)
(74) Representative: Sjöberg, Mats Hakan
(86) International application number: PCT/SE2003/001391
(87) International publication number: WO 2005/025257

(56) References cited:
- WO-A1-01/91374
- WO-A1-02/056622
- WO-A1-02/102111
- US-A1- 2002 077 091
- US-B1- 6 553 025

## Description

### TECHNICAL FIELD OF THE INVENTION

The present invention relates to methods and arrangements for monitoring media flow in a telecommunication network that comprises a control domain that handles session control and a bearer domain that handles the media flow.

### DESCRIPTION OF RELATED ART

Three major trends currently occurs in telecommunication, i.e. 1) increasing amount of data traffic, 2) real-time communication goes from circuit switching to packet switching, and 3) new focus of real-time in packet switching, for example video and multimedia. The ever increasing amount of data traffic as well as real-time communication in packet switched networks leads to a demand for monitoring of this data traffic with the same level of security and confidentiality as known from circuit switched networks monitoring. In circuit switched networks, e.g. telephony networks, it is customary to monitor communication connections from a remote operation centre so that a network operator wishing to operate real time traffic can constantly receive information on the quality of the communication lines. Another application of monitoring is lawful interception, i.e. the act of intercepting a communication on behalf of a law enforcement agency.

From the above, it is only natural that network operators will want to continue such monitoring approaches in other types of networks for example in packet switched networks.

Different approaches of interception/monitoring are known since before, for example in US 6,553,025 is disclosed how monitored calls are intercepted and rerouted to plural selected monitoring stations. An intervening monitoring centre hereby identifies the types of networks to be traversed and adapts duplicated voice message to such network type. The international application WO 01/91374 A1 relates to a method for intercepting packets in a packet oriented network. This is performed by copying information from a packet being transmitted in the network and transmits the copied information to a monitoring means. WO 02/056622 A1 relates to a method of activating rerouting of a data link in malfunction. A monitoring element is hereby arranged for monitoring the state of the critical access point used by the data link. If the operation of the access point becomes unreliable, the monitoring element starts to search for an alternative access point for the data link and shifts the data link to use the alternative access point found. US 2002/0077091 shows a method for call forwarding, for example, from a fixed-wire telephone to a mobile telephone. Hereby monitoring of the subscriber equipment from which calls have been forwarded is performed in order to see whether the user takes some pre-defined action, such as lifting the receiver. If such action is detected, the call is re-routed.

Another approach is described in the international application WO 02/102111. It is proposed to provide an interception unit to store an identification of a communication connection to be monitored. A copying unit hereby copy selected cells to a monitoring connection. The solution according to the international application implies isolation of cells to be intercepted. The content of communication has according to the international application to be intercepted in the bearer network, which network does not naturally know the identity of the intercepted target. This causes enhanced signalling in the network. There is also a technical possibility with the solution in the international application, for the end-user to find out with which IP address he is communicating, i.e. to find out that interception is going on. This possibility is often considered as a drawback.

Requirements for lawful interception in 3GPP (3*^{rd}* Generation Partnership Project) networks are being standardised within 3GPP and ETSI. So far requirements on IMS (IP Multimedia Subsystem) for multimedia communication are only concerned with IRI (Intercept Related Information) and not with CC (Content of Communication), i.e. the media flow. The solutions specified so far within the standardisation work foresee interception only of IRI from IMS. This is a natural consequence of the fact that CC is, for normal two-party sessions, not processed within IMS. This means that CC will have to be intercepted by involving the backbone or access network.

In a 3GPP environment an IMS subscriber is able to roam between different access lines without necessarily being a subscriber in the backbone or access networks. The identification of the target may therefore require an extensive co-ordination of information from IMS and the backbone network and access network.

### SUMMARY OF THE INVENTION

The present invention relates to problems how to handle monitoring of a media flow when session control and media flow uses different paths. In particular, problems arise when subscribers involved in the media flow move between different access networks.

The problems are solved by the invention by re-routing the session for which monitoring is desired, via a dedicated server function having a fixed location, which location is independent of change of location of subscribers involved in the media flow. The media flow that passes the dedicated server function is then monitored.

More in detail, the problem is solved by a method for monitoring media flow in a telecommunication network. The network comprises a control domain and a bearer domain. Session control is handled in the control domain and media flow is handled in the bearer domain. The method comprises the following steps:
- Storing in a database in the control domain, identification of a first subscriber for which monitoring is desired;
- Setting up a connection between the first subscriber located in a first access network and a second subscriber;
- Sending an indicator from the control domain to the bearer domain of the first access network indicating that media flow involving the first subscriber is to be monitored;
- Initiating a dedicated server function in the bearer domain of the first access network and re-routing said media flow between the subscribers, via the dedicated monitoring server function;
- Monitoring the media flow that passes the server function.

An arrangement according to the invention comprises means for performing the above mentioned method steps.

The object of the present invention is to make it possible to perform real-time monitoring of Content of Communication flow.

An advantage with the invention is that monitoring can be accomplished with a minimum of signalling between control- and bearer domain, also when the monitored subscriber roams between different access networks.

Another advantage is that a minimum of adaptations of the normal network functions is required.

Yet another advantage is the possibility to conceal interception to involved subscribers and to other networks.

The invention will now be described more in detail with the aid of preferred embodiments in connection with the enclosed drawings.

### BRIEF DESCRIPTION OF THE DRAWINGS

Figure 1 belongs to prior art and discloses a block schematic illustration of two subscribers located in separate access networks. Control of the media flow is handled in a control domain and the media flow is handled in a bearer domain.
Figure 2 shows a block schematic illustration of two subscribers, each one located in one access networks. The figure discloses interception according to the invention.
Figure 3 shows a flow chart illustrating a method used to initiate interception according to the invention.
Figure 4 shows a configuration where interception is hidden for involved subscribers.
Figure 5 shows a configuration where a subscriber has moved away from its home network.

### DETAILED DESCRIPTION OF EMBODIMENTS

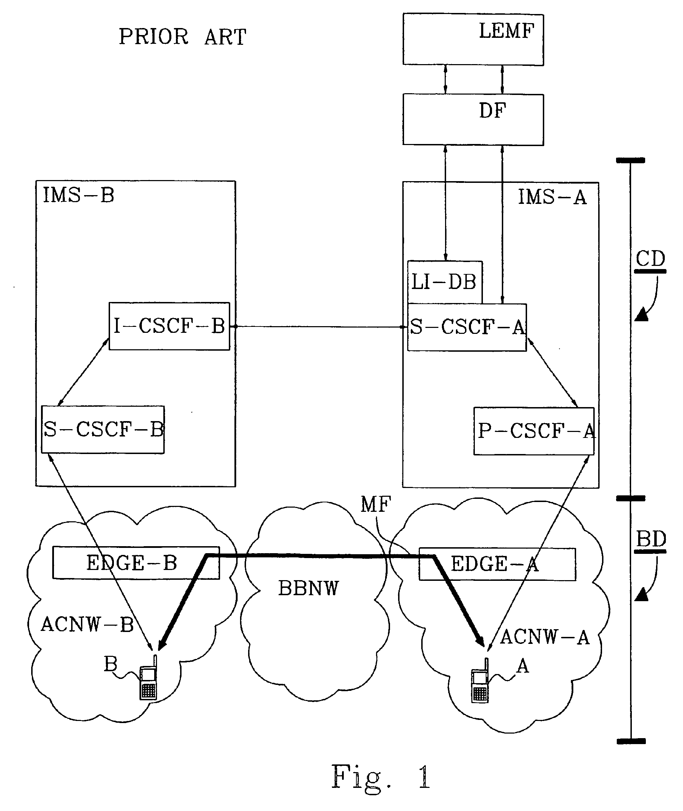

At first, interception of Intercept Related Information IRI according to current standardisation will be briefly discussed together with figure 1. Intercept Related Information IRI is defined as signalling information related to subscribers. Figure 1 belongs to prior art and discloses a first mobile subscriber A and a second mobile subscriber B. The subscriber A is located in a first access network ACNW-A, which network is subscriber A's home location. Subscriber B is located in a second access network ACNW-B. Media flow MF, for example speech, is communicated between the subscribers A and B via a backbone network BBNW. The media flow is transported in a path in the bearer domain BD. The control of the media flow takes place in the control domain CD. Control information can for example be, signalling during set-up of a call. The control information related to the A subscriber is handled in the IP multimedia subsystem domain IMS-A and the control information related to the B subscriber is handled in the IP multimedia subsystem domain IMS-B. The control information passes several Call/Session Control Functions CSCF in both IMS-A and IMS-B. Requirements for interception of control information, also called Intercept related information IRI, are being standardised within the 3GPP and ETSI. Figure 1 discloses interception of IRI according to prior art. The control information is hereby copied into a lawful interception database LI-DB located in relation to a serving CSCF in IMS-A, i.e. S-CSCF-A. The information is then forwarded from the LI-DB to a lawful interception monitoring facility LEMF, where the IRI is monitored. Information that is of interest to monitor can for example be if a certain subscriber has made a call, to whom the call was made and for how long time. After a call has been set-up between the subscriber A and B, the media flow MF between the subscribers is routed via an edge-node EDGE-A in the access network ACNW-A, the backbone network BBNW and via an edge-node EDGE-B in the access network ACNW-B.

According to the present invention, which now will be discussed, it is the content of communication that is of particular interest to monitor, i.e. the media flow MF in the bearer domain BD.

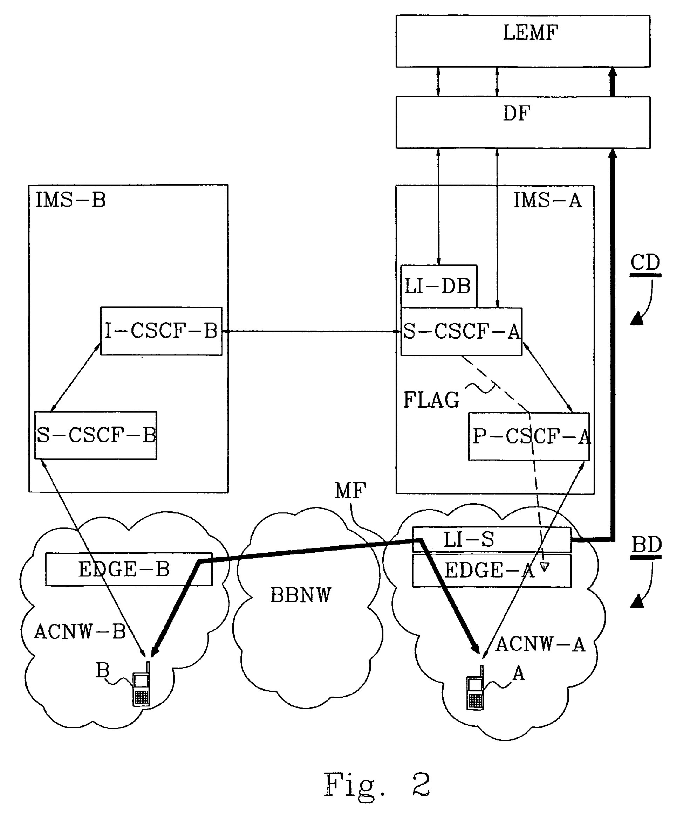

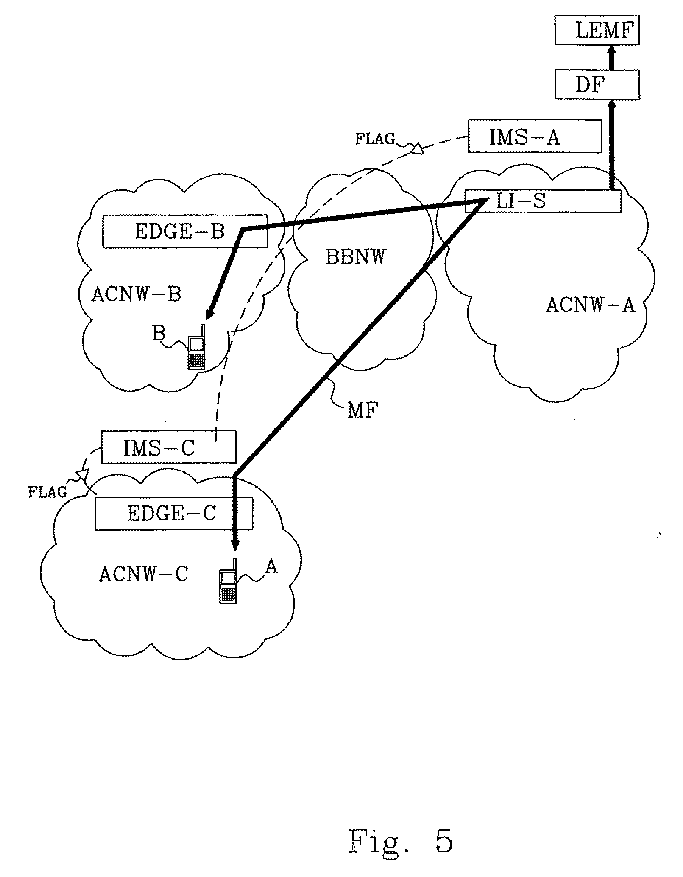

Figure 2 discloses interception according to the invention. The figure shows the same network as was disclosed in figure 1. A database, for example the lawful interception database LI-DB contains identification of what subscribers that are to be monitored. In this first embodiment, the first subscriber A is to be monitored and consequently an identification of A is stored in LI-DB. When a call is set-up between the subscriber A and the subscriber B, monitoring according to the invention takes place. The call set-up in this example involves the two IP multimedia domains IMS-A and IMS-B whereby control signalling is transferred between the domains. According to the invention an indicator FLAG is sent in connection with a call set-up involving the selected subscriber A, from the serving control function S-CSCF-A, via an interrogating control function P-CSCF-A to the access network ACNW-A. The FLAG is forwarded to the edge node EDGE-A in ACNW-A. When the indicator FLAG is received by EDGE-A in the access network ACNW-A a further node function i.e. a dedicated so-called lawful interception server function LI-S is initiated in ACNW-A. The LI-S is initiated by using an address that is predefined in EDGE-A to be used for re-routing of media flow via LI-S after arrival of the indicator FLAG. The media flow between the subscribers A and B is now re-routed to go via the lawful interception server function LI-S, compare figure 1. LI-S initiates a 3-part "conference" between A and B (the two original users) and a third user i.e. a Distribution Function DF. The distribution function is only a listener and is not to be recognised by A and B. Even if subscriber A should move from ACNW-A to another network, the media flow would still be routed via LI-S. The signalling in the control domain CD will by this be minimised. This can be seen in a third embodiment together with figure 5. During the whole media flow session, the DF forwards all the content flowing in both directions between A and B, from LI-S to a Lawful interception Enforcement Monitoring Function LEMF. As an alternative, the indicator FLAG might contain an adjusted IP address, which is used by the edge node to address LI-S. In this case no address to LI-S has to be predefined in the edge node. It is also to be noted that the location of LI-S is an example and that LI-S as well might be initiated somewhere else, for example in the backbone network BBNW. The server function LI-S does not have to be located in a physically separated server function.

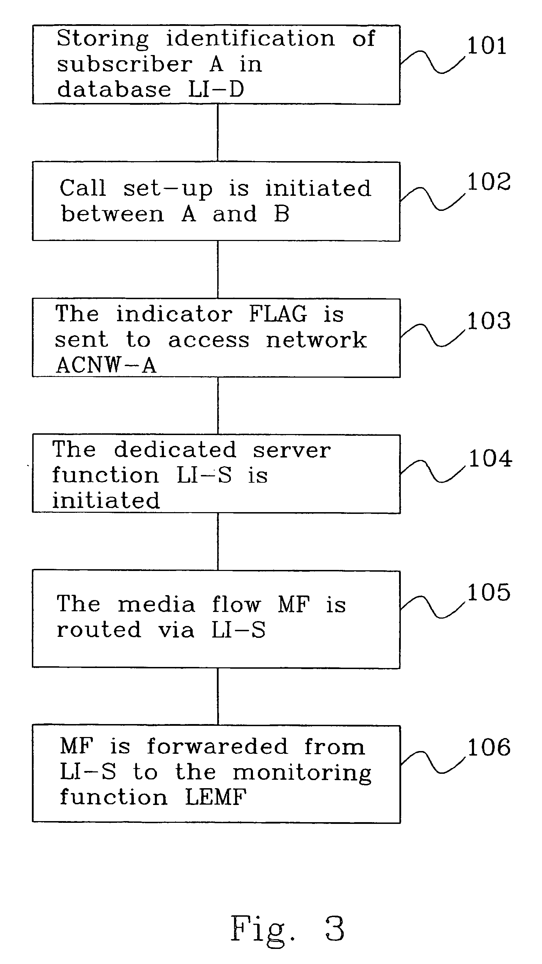

In figure 3 some essential steps of the invention is disclosed in a flowchart. The flowchart is to be read together with the earlier shown figure 2. The method according to the invention comprises the following steps:
- Storing in the lawful interception database LI-DB, identification of the first subscriber A, which is to be intercepted. This step is shown in figure 3 by a block 101.
- A call set-up between the first subscriber A and the second subscriber B is initiated. A block 102 shows this step.
- The indicator FLAG is sent from the IP multimedia subsystem IMS-A to the access network ACNW-A. A block 103 shows this step.
- A dedicated lawful interception server function LI-S is initiated in ACNW-A. A block 104 shows this step.
- The media flow MF is routed between the subscribers A and B via the lawful interception server function LI-S. A block 105 shows this step.
- The media flow is forwarded from LI-S to the Lawful Interception Monitoring Function LEMF where the MF is monitored. A block 106 shows this step.

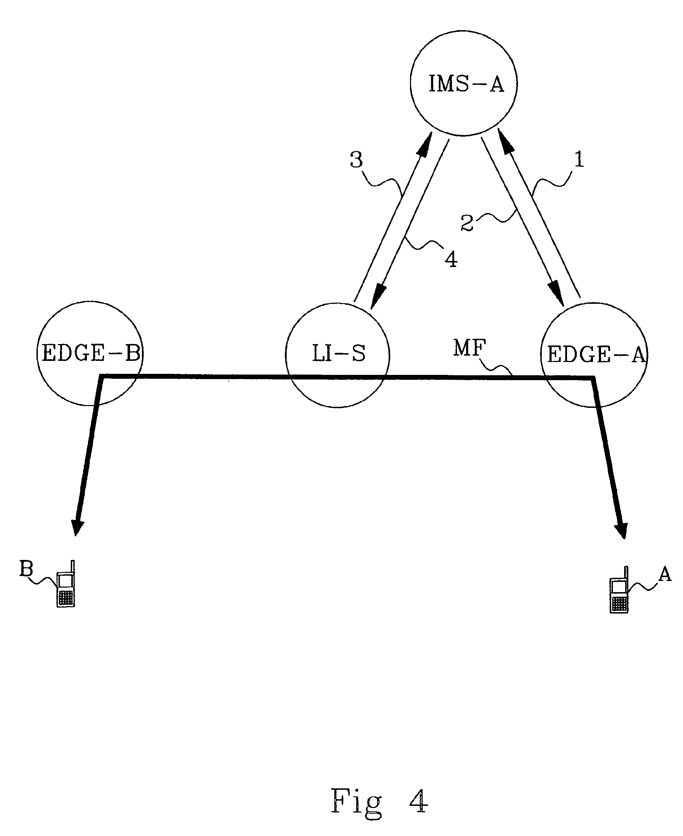

A second embodiment is disclosed in figure 4. Figure 4 shows parts of the network that has been disclosed in figure 2. The media flow MF is like in the earlier embodiments communicated between the first subscriber A and the second subscriber B. The media flow is hereby communicated via the edge-node EDGE-A in the access network ACNW-A, the lawful interception server function LI-S in ACNW-A and via the edge-node EDGE-B in the access network ACNW-B. In order to hide the interception to involved subscribers, a different addressing scheme has been implemented in this embodiment. In this embodiment, the inherent notification of the LI-S address is unknown by the edge node during the whole monitoring session. The different addressing scheme is set-up after reception of the notification to EDGE-A, that subscriber A is to be intercepted. The media flow is re-routed via the lawful interception server function LI-S, but in this second embodiment the routing will be hidden. The edge-node is hereby unaware of the lawful interception server function LI-S and the subscriber A can not reach information about LI-S from the edge-node. When a data packet arrives from the subscriber A to the edge node, instead of forwarding the packet to LI-S (unknown to EDGE-A), the edge-node will send a request message 1 to the IP multimedia subsystem domain IMS-A asking for an address to subscriber B to forward the packet to. The IMS-A replies to EDGE-A by sending a reply message 2 with an address to LI-S, and EDGE-A uses this address to forward the packet to LI-S. In the same way when LI-S is to send the packet arrived from the edge node, the LI-S send a request message 3 to the IP multimedia subsystem domain IMS-A asking for an address to forward the packet to. The IMS-A replies to EDGE-A by sending a reply message 4 with an address to the second subscriber B.

The already mentioned third embodiment is disclosed in figure 5. The first subscriber A has, like in the earlier two embodiments, its home location in the first access networks ACNW-A. In this third embodiment however, the subscriber A has moved temporarily to another network ACNW-C. ACNW-C comprises an edge node EDGE-C. The IP multimedia subsystem domain IMS-A will be involved in the session initiation between subscriber A and another subscriber, subscriber B in this case. The indicator FLAG will in this case be sent from IMS-A to ACNW-C via an IP multimedia subsystem IMS-C. The indicator FLAG contains in this case an adjusted IP address, which is used by the edge node EDGE-C to address LI-S. The media flow MF between A and B will then be routed via the lawful interception server function LI-S which is located in ACNW-A. This means that data packets in the media flow MF from subscriber A will be sent from the edge node EDGE-C, via LI-S in ACNW-A, to EDGE-B. Data packets in the media flow from subscriber B will be sent from EDGE-B, via LI-S in ACNW-A, to EDGE-C. The media flow between the subscribers A and B is now routed to go via the lawful interception server function LI-S. LI-S initiates a 3-part "conference" between A and B (the two original users) and the Distribution Function DF. The distribution function is only a listener and is not to be recognised by A and B.

Different variations are of course possible within the scope of the invention. The lawful interception server function LI-S can for example be located in the backbone network BBNW or within the edge node EDGE-A. The two subscribers A and B can be situated in the same access network or in different access networks in different countries. In the embodiments, the subscriber A is the monitored subscriber and if using standard telecommunication terminology it can be assumed that the subscriber A also is the calling subscriber while subscriber B is the called subscriber. It is to be noted that the claimed invention also covers cases when the monitored subscriber is the called subscriber. Also conference calls involving more than two parties is covered by the claimed invention and of course also when more than one subscriber in the conference is monitored. The subscriber unit for which interception is desired may have roamed to an access network in another country than the country of the subscribers home access network. It is important to observe that interception only is one type of monitoring for which the invention is applicable. Other types of monitoring might for example be monitoring of the type of media flow or quality measurements monitoring. The flag indicator is in the example sent during the call set-up session but can of course also be sent after the call set-up has finished in which case the media flow is re-routed via the lawful interception server function.

The invention is not limited to the above described and in the drawings shown embodiments but can be modified within the scope of the enclosed claims.

## Claims

1. Method for monitoring media flow in a telecommunication network comprising a control domain, handling session control and a bearer domain, handling media flow, which method comprises the following steps:
- storing in a database (LI-DB) in the control domain, identification of a first subscriber (A) for which monitoring is desired;
- setting up a connection between the first subscriber (A) located in a first access network (ACNW-A) and a second subscriber (B); **characterised by**
- sending an indicator (FLAG) from the control domain to the bearer domain of the first access network indicating that media flow involving the first subscriber (A) is to be monitored;
- initiating a dedicated server function (LI-S) in the bearer domain of the first access network and re-routing said media flow between the subscribers, via the dedicated server function (LI-S);
- monitoring the media flow that passes the server function (LI-S).

2. Method for monitoring media flow in a telecommunication network according to claim 1, wherein the first subscriber (A) change location from the first access network (ACNW-A) to another access network (ACNW-C) wherein an adjusted address is received from the control domain to the bearer domain of the other access network (ACNW-C) and wherein the media flow is re-routed from the first subscriber (A) to the second subscriber (B) via the dedicated server function (LI-S) in the first network (ACNW-A).

3. Method for monitoring media flow in a telecommunication network according to claims 1, wherein the media flow passes an edge-node (EDGE-A) in the bearer domain of the first access network (ACNW-A) and whereby the initiation of the dedicated server function is executed after receiving the indicator (FLAG) to the edge-node (EDGE-A).

4. Method for monitoring media flow in a telecommunication network according to claim 3 whereby the dedicated server function (LI-S) is initiated by using a predefined address in the edge-node (EDGE-A).

5. Method for monitoring media flow in a telecommunication network according to any of the previous claims, comprising the following further step:
- exchanging an address to the dedicated server function (LI-S) against a pseudo address, to hide the routing of the media flow via the server function (LI-S) for the involved subscribers (A and B).

6. Method for monitoring media flow in a telecommunication network according to any of previous claims, comprising the following further step:
- setting up a three-part conference between the two involved subscribers (A and B) and a monitoring function (LEMF) whereby the monitoring function is a listener only function.

7. An arrangement suitable for monitoring media flow in a telecommunication network comprising a control domain, handling session control and a bearer domain, handling media flow, which arrangement comprises:
- means for storing in a database (LI-DB) in the control domain, identification of a first subscriber (A) for which monitoring is desired;
- means for setting up a connection between the first subscriber (A) located in a first access network (ACNW-A) and a second subscriber (B); **characterised by**
- means for sending an indicator (FLAG) from the control domain to the bearer domain of the first access network indicating that media flow involving the first subscriber (A) is to be monitored;
- means for initiating a dedicated server function (LI-S) in the bearer domain of the first access network and re-routing said media flow between the subscribers, via the dedicated server function (LI-S);
- means for monitoring the media flow that passes the server function (LI-S).

8. An arrangement suitable for monitoring media flow in a telecommunication network according to claim 7, wherein the first subscriber (A) change location from the first access network (ACNW-A) to another access network (ACNW-C)which arrangement comprises means to receive an adjusted address from the control domain to the bearer domain of the other access network (ACNW-C) and means to re-route the media flow from the first subscriber (A) to the second subscriber (B) via the dedicated server function (LI-S) in the first network (ACNW-A).

9. An arrangement suitable for monitoring media flow in a telecommunication network according to any of claims 7-8, wherein the media flow passes an edge-node (EDGE-A) in the bearer domain of the first access network (ACNW-A) and which arrangement comprises means to execute the initiation of the dedicated server function after receiving the indicator (FLAG) to the edge-node (EDGE-A).

10. An arrangement suitable for monitoring media flow in a telecommunication network according to any of the claims 7-9, comprising means to exchange an address to the dedicated server function (LI-S) against a pseudo address.

11. An arrangement suitable for monitoring media flow in a telecommunication network according to any of the claims 7-10, comprising means to set up a three-part conference between the two involved subscribers (A and B) and a monitoring function (LEMF) whereby the monitoring function is a listener only function.

## Patentansprüche

1. Verfahren zum Überwachen eines Medienflusses in einem Telekommunikationsnetzwerk mit einer Steuerdomäne, die eine Sitzungssteuerung handhabt und einer Trägerdomäne, die den Medienfluss handhabt, wobei das Verfahren die folgenden Schritte umfasst:
- Speichern in einer Datenbank (LI-DB) in der Steuerdomäne einer Identifikation eines ersten Teilnehmers (A), für den ein Überwachen gewünscht wird;
- Herstellen einer Verbindung zwischen dem ersten Teilnehmer (A), der in dem ersten Zugangsnetzwerk (ACNW-A) lokalisiert ist und einem zweiten Teilnehmer (B); **gekennzeichnet durch**
- Senden eines Indikators (FLAG) von der Steuerdomäne zu der Trägerdomäne des ersten Zugangsnetzwerkes, die anzeigt, dass ein Medienfluss, der den ersten Teilnehmer (A) beteiligt, überwacht werden soll;
- Initiieren einer dedizierten Server-Funktion (LI-S) in der Trägerdomäne des ersten Zugangsnetzwerkes und Neu-Weiterleiten (Re-Routing) des Medienflusses zwischen den Teilnehmern über die dedizierte Server-Funktion (LI-S);
- Überwachen des Medienflusses, der die Server-Funktion (LI-S) durchläuft.

2. Verfahren zum Überwachen eines Medienflusses in einem Telekommunikationsnetzwerk nach Anspruch 1, wobei der erste Teilnehmer (A) einen Ort von dem ersten Zugangsnetzwerk (ACNW-A) zu einem anderen Zugangsnetzwerk (ACNW-C) ändert, wobei eine angeglichene Adresse von der Steuerdomäne zu der Trägerdomäne des anderen Zugangsnetzwerkes (ACNW-C) empfangen wird und wobei der Medienfluss von dem ersten Teilnehmer (A) zu dem zweiten Teilnehmer (B) über die dedizierte Server-Funktion (LI-S) in dem ersten Netzwerk (ACNW-A) neuweitergeleitet wird.

3. Verfahren zum Überwachen eines Medienflusses in einem Telekommunikationsnetzwerk nach Anspruch 1, wobei der Medienfluss einen Kantenknoten (EDGE-A) in der Trägerdomäne des ersten Zugangsnetzwerkes (ACNW-A) durchläuft und wobei die Initiierung der dedizierten Server-Funktion nach einem Empfangen des Indikators (FLAG) an dem Kantenknoten (EDGE-A) ausgeführt wird.

4. Verfahren zum Überwachen eines Medienflusses in einem Telekommunikationsnetzwerk nach Anspruch 3, wobei die dedizierte Server-Funktion (LI-S) durch Verwenden einer vordefinierten Adresse in dem Kantenknoten (H-A) initiiert wird.

5. Verfahren zum Überwachen eines Medienflusses in einem Telekommunikationsnetzwerk nach einem der vorangehenden Ansprüche, mit dem folgenden weiteren Schritt:
- Austauschen einer Adresse zu der dedizierten Server-Funktion (LI-S) gegen eine Pseudoadresse, um das Weiterleiten (Routing) des Medienflusses über die Server-Funktion (LI-S) für die beteiligten Teilnehmer (A und B) zu verbergen.

6. Verfahren zum Überwachen eines Medienflusses in einem Telekommunikationsnetzwerk nach einem der vorangehenden Ansprüche, mit dem weiteren folgenden Schritt:
- Herstellen einer Dreiteile-Konferenz zwischen den beteiligten Teilnehmern (A und B) und einer Überwachungsfunktion (LEMF), wobei die Überwachungsfunktion eine Nurhörerfunktion ist.

7. Anordnung, geeignet zum Überwachen des Medienflusses in einem Telekommunikationsnetzwerk mit einer Steuerdomäne, die eine Sitzungssteuerung handhabt und einer Trägerdomäne, die den Medienfluss handhabt, wobei die Anordnung umfasst:
- eine Vorrichtung zum Speichern in einer Datenbank (LI-DB) in der Steuerdomäne einer Identifikation eines ersten Teilnehmers (A), für den ein Überwachen gewünscht wird;
- eine Vorrichtung zum Herstellen einer Verbindung zwischen dem ersten Teilnehmer (A), der in dem ersten Zugangsnetzwerk (ACNW-A) lokalisiert ist und einem zweiten Teilnehmer (B); **gekennzeichnet durch**
- eine Vorrichtung zum Senden eines Indikators (FLAG) von der Steuerdomäne zu der Trägerdomäne des ersten Zugangsnetzwerkes, die anzeigt, dass ein Medienfluss, der den ersten Teilnehmer (A) beteiligt, überwacht werden soll;
- eine Vorrichtung zum Initiieren einer dedizierten Server-Funktion (LI-S) in der Trägerdomäne des ersten Zugangsnetzwerkes und Neu-Weiterleiten (Re-Routing) des Medienflusses zwischen den Teilnehmern über die dedizierte Server-Funktion (LI-S);
- eine Vorrichtung zum Überwachen des Medienflusses, der die Server-Funktion (LI-S) durchläuft.

8. Anordnung, geeignet zum Überwachen eines Medienflusses in einem Telekommunikationsnetzwerk nach Anspruch 7, wobei der erste Teilnehmer (A) einen Ort von dem ersten Zugangsnetzwerk (ACNW-A) zu einem anderen Zugangsnetzwerk (ACNW-C) ändert, wobei die Anordnung eine Vorrichtung umfasst, um eine angeglichene Adresse von der Steuerdomäne zu der Trägerdomäne des anderen Zugangsnetzwerkes (ACNW-C) zu empfangen und eine Vorrichtung, um den Medienfluss von dem ersten Teilnehmer (A) zu dem zweiten Teilnehmer (B) über die dedizierte Server-Funktion (LI-S) in dem ersten Netzwerk (ACNW-A) neu-weiterzuleiten.

9. Anordnung, geeignet zum Überwachen eines Medienflusses in einem Telekommunikationsnetzwerk nach einem der Ansprüche 7-8, wobei der Medienfluss einen Kantenknoten (EDGE-A) in der Trägerdomäne des ersten Zugangsnetzwerkes (ACNW-A) durchläuft und wobei die Anordnung eine Vorrichtung umfasst, um die Initiierung der dedizierten Server-Funktion nach einem Empfangen des Indikators (FLAG) an dem Kantenknoten (EDGE-A) auszuführen.

10. Anordnung, geeignet zum Überwachen eines Medienflusses in einem Telekommunikationsnetzwerk nach einem der Ansprüche 7-9, mit einer Vorrichtung, um eine Adresse zu der dedizierten Server-Funktion (LI-S) gegen eine Pseudoadresse auszutauschen.

11. Anordnung, geeignet zum Überwachen eines Medienflusses in einem Telekommunikationsnetzwerk nach einem der Ansprüche 7-10, mit einer Vorrichtung, um eine Dreiteile-Konferenz zwischen den zwei beteiligten Teilnehmern (A und B) und einer Überwachungsfunktion (LEMF) herzustellen, wobei die Überwachungsfunktion eine Nurhörerfunktion ist.

## Revendications

1. Procédé pour contrôler un flux de média dans un réseau de télécommunication comprenant un domaine de commande, traitant une commande de session, et un domaine de support, traitant un flux de média, lequel procédé comprend les étapes suivantes qui consistent :
- à stocker dans une base de données (LI-DB) dans le domaine de commande, une identification d'un premier abonné (A) pour lequel un contrôle est souhaité ;
- à établir une connexion entre le premier abonné (A) situé dans un premier réseau d'accès (ACNW-A) et un second abonné (B) ; **caractérisé par**
- l'envoi d'un indicateur (FLAG) du domaine de commande au domaine de support du premier réseau d'accès indiquant qu'un flux de données impliquant le premier abonné (A) doit être contrôlé ;
- le déclenchement d'une fonction de serveur dédié (LI-S) dans le domaine de support du premier réseau d'accès et le réacheminement dudit flux de média entre les abonnés, en passant par la fonction de serveur dédié (LI-S) ;
- le contrôle du flux de média qui passe par la fonction de serveur (LI-S).

2. Procédé pour contrôler un flux de média dans un réseau de télécommunication selon la revendication 1, dans lequel le premier abonné (A) change d'emplacement du premier réseau d'accès (ACNW-A) à un autre réseau d'accès (ACNW-C), dans lequel une adresse ajustée est reçue du domaine de commande au domaine de support de l'autre réseau d'accès (ACNW-C) et dans lequel le flux de média est réacheminé du premier abonné (A) au second abonné (B) en passant par la fonction de serveur dédié (LI-S) dans le premier réseau (ACNW-A).

3. Procédé pour contrôler un flux de média dans un réseau de télécommunication selon la revendication 1, dans lequel le flux de média passe par un noeud de bord (EDGE-A) dans le domaine de support du premier réseau d'accès (ACNW-A) et par lequel le déclenchement de la fonction de serveur dédié est exécutée après la réception de l'indicateur (FLAG) au noeud de bord (EDGE-A).

4. Procédé pour contrôler un flux de média dans un réseau de télécommunication selon la revendication 3, dans lequel la fonction de serveur dédié (LI-S) est déclenchée par l'utilisation d'une adresse prédéfinie dans le noeud de bord (EDGE-A).

5. Procédé pour contrôler un flux de média dans un réseau de télécommunication selon l'une quelconque des revendications précédentes, comprenant en outre l'étape suivante qui consiste :
- à échanger une adresse à la fonction de serveur dédié (LI-S) contre une pseudo-adresse, afin de masquer l'acheminement du flux de données passant par la fonction de serveur (LI-S) pour les abonnés impliqués (A et B).

6. Procédé pour contrôler un flux de média dans un réseau de télécommunication selon l'une quelconque des revendications précédentes, comprenant en outre l'étape suivante qui consiste :
- à établir une conférence à trois parties entre les deux abonnés impliqués (A et B) et une fonction de contrôle (LEMF), la fonction de contrôle étant une fonction uniquement d'auditeur.

7. Montage apte à contrôler un flux de média dans un réseau de télécommunication comportant un domaine de commande, traitant une commande de session, et un domaine de support, traitant un flux de média, lequel montage comporte :
- un moyen destiné à stocker dans une base de données (LI-DB) dans le domaine de commande, une identification d'un premier abonné (A) pour lequel un contrôle est souhaité ;
- un moyen destiné à établir une connexion entre le premier abonné (A) se trouvant dans un premier réseau d'accès (ACNW-A) et un second abonné (B) ; **caractérisé par**
- un moyen destiné à envoyer un indicateur (FLAG) du domaine de commande au domaine de support du premier réseau d'accès indiquant qu'un flux de média impliquant le premier abonné (A) doit être contrôlé ;
- un moyen destiné à déclencher une fonction de serveur dédié (LI-S) dans le domaine de support du premier réseau d'accès et à réacheminer ledit flux de média entre les abonnés, en passant par la fonction de serveur dédié (LI-S) ;
un moyen destiné à contrôler le flux de média qui passe par la fonction de serveur (LI-S).

8. Montage apte à contrôler un flux de média dans un réseau de télécommunication selon la revendication 7, dans lequel le premier abonné (A) change de position du premier réseau d'accès (ACNW-A) à un autre réseau d'accès (ACNW-C), lequel montage comporte un moyen destiné à recevoir une adresse ajustée depuis le domaine de commande vers le domaine de support de l'autre réseau d'accès (ACNW-C) et un moyen destiné à réacheminer le flux de média du premier abonné (A) au second abonné (B) en passant par la fonction de serveur dédié (LI-S) dans le premier réseau (ACNW-A).

9. Montage apte à contrôler un flux de média dans un réseau de télécommunication selon l'une des revendications 7 et 8, dans lequel le flux de média passe par un noeud de bord (EDGE-A) dans le domaine de support du premier réseau d'accès (ACNW-A) et lequel montage comporte un moyen destiné à exécuter le déclenchement de la fonction de serveur dédié après la réception de l'indicateur (FLAG) au noeud de bord (EDGE-A).

10. Montage apte à contrôler un flux de média dans un réseau de télécommunication selon l'une quelconque des revendications 7 à 9, comportant un moyen destiné à échanger une adresse pour la fonction de serveur dédié (LIS) contre une pseudo-adresse.

11. Montage apte à contrôler un flux de média dans un réseau de télécommunication selon l'une quelconque des revendications 7 à 10, comportant un moyen destiné à établir une conférence à trois parties entre les deux abonnés impliqués (A et B) et une fonction de contrôle (LEMF), la fonction de contrôle étant uniquement une fonction d'auditeur.
